# FASCICULE DE BREVET EUROPEEN

(11) **EP 3 069 304 B1**
(45) Date de publication et mention de la délivrance du brevet: **02.09.2020**
(21) Numéro de dépôt: 14796097.5
(22) Date de dépôt: 10.11.2014
(51) Int. Cl.: G06K 19/077

(54) **DISPOSITIF ELECTRONIQUE INTERCONNECTÉ ET SON PROCÉDÉ DE FABRICATION**
VERNETZTE ELEKTRONISCHE VORRICHTUNG UND IHR HERSTELLUNGSVERFAHREN
INTERCONNECTED ELECTRONIC DEVICE AND METHOD FOR MANUFACTURING SAME

(30) Priorité: 12.11.2013 EP 13306541
(43) Date de publication de la demande: 21.09.2016
(73) Titulaire: Thales Dis France SA, 92190 Meudon (FR)
(72) Inventeur: ROBLES, Laurence, F-13881 Gemenos Cedex (FR); TOUVET, Stéphane, F-13881 Gemenos Cedex (FR); THILL, Michel, F-13881 Gemenos Cedex (FR)
(86) Numéro de dépôt international: PCT/EP2014/074161
(87) Numéro de publication internationale: WO 2015/071216

(56) Documents cités:
- EP-A1- 2 450 837
- EP-A2- 0 671 705
- EP-A2- 1 498 843
- DE-A1- 19 955 538
- DE-A1-102010 028 444
- US-A1- 2012 248 201

## Description

L'invention concerne le domaine technique des dispositifs électroniques interconnectés, tels que par exemple les cartes à puce interconnectées.

Les dispositifs électroniques interconnectés comprennent en général au moins un premier composant électronique, ou électrique, comportant au moins une première plage d'interconnexion, et un circuit électronique, ou électrique, noyé dans le corps du dispositif, supportant au moins un deuxième composant électronique, ou électrique, et pourvu d'au moins une deuxième plage d'interconnexion. Chaque première plage d'interconnexion du premier composant est électriquement reliée à chaque deuxième plage d'interconnexion du circuit afin de permettre une interconnexion électrique entre le premier composant et le deuxième composant supporté par le circuit.

Les premiers et deuxièmes composants électroniques, ou électriques, ne sont généralement pas au même niveau dans l'épaisseur du corps du dispositif. Par conséquent, pour réaliser l'interconnexion entre les premières et deuxièmes plages d'interconnexion, des puits sont en général creusés dans le corps du dispositif électronique, au droit des premières et deuxièmes plages d'interconnexion, et les puits sont ensuite remplis d'un matériau conducteur afin de pouvoir établir la connexion électrique.

Pour mieux comprendre les inconvénients d'une telle interconnexion électrique, celle - ci est décrite plus en détail ci-dessous en prenant l'exemple d'une carte à puce bancaire dite « interconnectée ».

Dans le cas particulier des cartes bancaires, celles-ci disposent de puces électroniques pour sécuriser la transaction. La norme EMV a été créée par Europay, Mastercard et Visa dont les initiales font la norme, pour définir un standard d'interopérabilité et de sécurité entre cartes à puce bancaires. Pour qu'une carte soit certifiée EMV, il faut que celle-ci dispose d'une puce elle-même certifiée, électriquement connectée à une interface de communication à contact selon la norme ISO 7816 et/ou sans contact selon la norme ISO14443. Pour limiter les risques de piratage, les puces EMV ne disposent pas d'autre interface de communication.

La puce sécurisée et l'interface de communication avec et/ou sans contact forment un module électronique sécurisé. Lorsque la carte fonctionne dans un mode à contacts, l'interface de communication du module électronique comprend des plages de contact externes sur une face externe du module, destinée à affleurer la surface de la carte à puce. Lorsque la carte fonctionne dans un mode sans contact, l'interface de communication du module électronique sécurisé comprend une antenne à motif spiralé disposé dans le corps de carte.

Plus particulièrement, il est aussi connu de faire des cartes bancaires dites « interconnectées » qui permettent non seulement d'afficher les transactions passées, mais aussi de générer et afficher un mot de passe à usage unique pour les transactions en ligne par exemple. Ces cartes disposent d'un circuit imprimé sur un substrat flexible. Le circuit imprimé supporte des composants électroniques et notamment un microcontrôleur, un écran, une batterie et un ou plusieurs boutons poussoirs pour communiquer avec le porteur de carte. Plus particulièrement, le microcontrôleur du circuit imprimé permet de lire des informations contenues dans la puce, et notamment les dernières transactions ayant eu lieu, et de les afficher sur l'écran. Pour cela, le circuit imprimé est électriquement connecté à l'interface de communication du module sécurisé. Plus particulièrement, l'interface de communication du module électronique sécurisé comprend, quel que soit le mode de fonctionnement avec et/ou sans contact de la carte, une pluralité de plages d'interconnexion disposées sur une face cachée du module, opposée à la surface externe de la carte à puce, et destinées à être électriquement connectées au circuit imprimé.

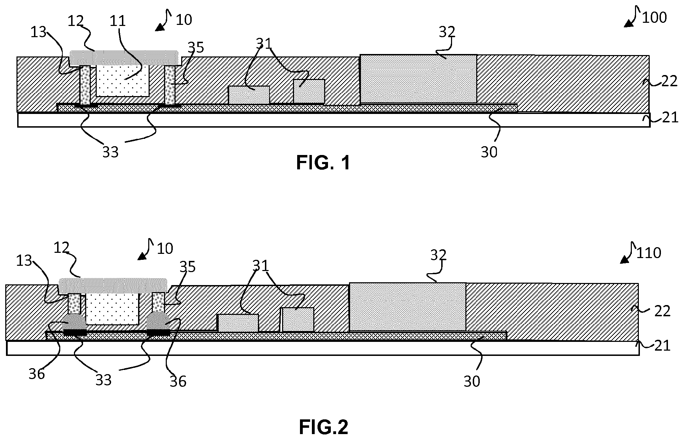

La Figure 1 illustre une vue en coupe schématique d'une carte bancaire interconnectée 100, telle qu'actuellement réalisée, disposant d'un module électronique 10 sécurisé comprenant une puce sécurisée encapsulée dans une résine de protection 11 et reliée électriquement à une interface de communication à contacts. Le module électronique 10 est électriquement connecté à un circuit imprimé 30 embarqué dans le corps de carte et supportant des composants électroniques référencés 31 et un écran 32 par exemple. Des plages de contact 12 externes de l'interface de communication du module électronique sécurisé 10 affleurent la surface de la carte 100. Des plages d'interconnexion 13 situées sur la face interne de l'interface de communication du module électronique sécurisé 10 sont en outre électriquement connectées à d'autres plages d'interconnexion 33 du circuit imprimé 30 embarqué dans le corps de carte, qui sont elles-mêmes électriquement reliées à un ou plusieurs composants électroniques du circuit imprimé. De manière classique, pour réaliser la connexion électrique entre les plages d'interconnexion 13 du module électronique sécurisé 10 et les plages d'interconnexion 33 du circuit imprimé 30, des puits 35 sont creusés dans une cavité du corps de carte réservée à l'interface de communication du module, au droit des plages d'interconnexion 33 du circuit imprimé 30 et des plages d'interconnexion 13 du module électronique sécurisé 10. Les puits 35 sont ensuite remplis d'un matériau conducteur afin de pouvoir établir la connexion électrique.

Cependant, du fait de l'épaisseur des composants qu'il supporte et notamment de l'épaisseur de l'écran, ou de la batterie, le circuit imprimé doit être disposé sur une couche du corps de carte proche de la surface opposée à la surface externe à laquelle affleurent les plages de contact externes 12 et l'écran 32. Par conséquent, les puits conducteurs 35 permettant l'interconnexion électrique entre les plages d'interconnexion 13 du module électronique sécurisé et les plages d'interconnexion 33 du circuit imprimé 30 doivent présenter une épaisseur de l'ordre de 400 à 500µm. Les plages d'interconnexion 33 du circuit imprimé, quant-à-elles, présentent une épaisseur de l'ordre de 20µm. Or, la tolérance lors de l'usinage des puits 35 dans l'épaisseur de la carte, est de l'ordre de 20µm. Par conséquent, cette solution est très délicate à mettre en œuvre car elle requiert beaucoup de précision pour d'une part trouver chaque plages d'interconnexion 33 du circuit imprimé embarqué dans le corps de carte et d'autre part l'atteindre sans la détruire. Sur la Figure 1, on remarque que l'usinage des puits 35 est trop profond et a détruit une partie des plages d'interconnexion 33. Le contact électrique est donc fragilisé et présente une durée de vie sensiblement réduite. Il arrive aussi que les plages d'interconnexion 33 du circuit imprimé soient complètement percées suite à l'usinage des puits 35 et, dans ce cas, les cartes sont détruites et destinées au rebus. Une telle méthode d'interconnexion est donc beaucoup trop délicate à mettre en œuvre, elle engendre un taux trop important de cartes défectueuses, si bien que le coût de fabrication des cartes s'en trouve trop élevé. Une telle méthode d'interconnexion ne peut donc pas être adaptée à un procédé industriel.

Une solution alternative qui a été envisagée et qui est illustrée sur le schéma en coupe de la Figure 2, consiste à déposer, sur les plages d'interconnexion 33 du circuit imprimé 30, des billes ou un plot d'une pâte à braser, en général en étain ou en alliage étain/argent/cuivre. Le dépôt est en général réalisé par sérigraphie. Le circuit imprimé supportant les composants électroniques est ensuite passé dans un four de refusion. A la suite de ce traitement thermique, on obtient une brasure en forme de dôme 36 sur chaque plage d'interconnexion 33 à interconnecter. Au moment de l'usinage de la cavité d'accueil du module électronique sécurisé 10, des puits 35 sont également usinés au droit des dômes 36 puis sont remplis d'une matière conductrice. Le module électronique sécurisé 10 est alors reporté dans sa cavité de sorte que ses plages d'interconnexion 13 soient électriquement connectées aux plages d'interconnexion 33 du circuit imprimé par l'intermédiaire des dômes 36 et des puits conducteurs 35.

Cette solution présente cependant plusieurs inconvénients. Du fait de la place du circuit imprimé 30 dans le corps de carte 110, qui doit être la plus éloignée possible de la surface externe à laquelle affleurent les plages de contact externes 12 du module électronique sécurisé 10 et l'écran 32, la hauteur de la connexion à réaliser entre les plages d'interconnexion 13 du module électronique sécurisé 10 et les plages d'interconnexion 33 du circuit imprimé est comprise entre 400 et 500µm. Or, les autres composants électroniques qui sont reportés sur le circuit imprimé n'ont pas besoin d'une si grande épaisseur de pâte à braser pour être reportés. Par conséquent, cette solution nécessite de déposer une première couche de pâte à braser d'une épaisseur correspondant à une épaisseur nécessaire pour reporter les composants électroniques sur le circuit imprimé, puis de passer le circuit imprimé une première fois dans le four de refusion afin de fixer les composants sur le circuit. Dans une deuxième étape, une épaisseur nécessaire, comprise entre 300 et 400µm, de pâte à braser est déposée sur chacune des plages d'interconnexion 33 du circuit imprimé à connecter à l'interface de communication du module électronique sécurisé, pour permettre l'établissement de l'interconnexion électrique, puis le circuit imprimé est passé une deuxième fois dans le four de refusion afin d'obtenir les dômes d'interconnexion sur chacune des plages d'interconnexion 33. Or, le fait de faire subir deux traitements thermiques consécutifs a tendance à endommager le circuit imprimé. Par conséquent, cette solution implique également l'apparition de défauts dans les cartes dus à des connexions électriques qui ne sont pas suffisamment fiables entre la puce sécurisée et le circuit imprimé.

Les solutions existantes pour interconnecter les plages d'interconnexion du module électronique sécurisé aux plages d'interconnexion du circuit imprimé ne donnent donc pas entière satisfaction. Elles sont en effet difficiles à réaliser car nécessitent beaucoup de précision. De plus, le procédé de fabrication nécessite plusieurs étapes fastidieuses et ne permet pas d'obtenir un bon rendement, du fait d'un taux élevé de cartes défectueuses dû à l'obtention d'une interconnexion électrique de mauvaise qualité. Ces solutions sont donc trop coûteuses et ne sont pas adaptées à un procédé industriel.

Le document US 2012/248201 décrit un procédé de fabrication de carte à puce à interface duale. Il comprend un module hybride à puce électronique connecté à une antenne logé dans un corps de carte. La connexion électrique du module à l'antenne s'effectue à l'aide d'éléments de connexion électrique fixés sur le module et sur l'antenne. Ces éléments ont des formes incurvées de manière à coopérer ensemble pour s'accrocher mutuellement et permettre une connexion électrique flexible lors d'un mouvement relatif du module par rapport au corps de carte.

Le document EP 1 498 843 décrit une carte à puce, comprenant des plaques de métal d'interconnexion électriquement reliées à un fil d'antenne et intégrées dans un corps de carte avec le fil d'antenne. Un module de circuit intégré est également intégré dans le corps de carte et relié électriquement aux plaques de métal d'interconnexion. L'épaisseur des plaques n'est pas calibrée. Elle est usinée lors d'une réalisation de cavité pour recevoir et connecter le module.

Le document DE 199 55 538 décrit un support de circuit imprimé pour être laminé dans une carte à puce, comprenant au moins un conducteur imprimé et des composants connectés au circuit imprimé.

Le document EP 0671 705 décrit un procédé de fabrication de la carte à puce comprenant une antenne dans un corps de carte. Une cavité est ensuite formée dans le corps de carte pour exposer les bornes de l'antenne. Le module électronique est placé dans la cavité et connecté aux bornes de l'antenne par tout moyen électrique.

Le document EP2450 837 décrit un procédé de fabrication similaire au précédent dans lequel les moyens d'interconnexion électriques pour connecter le module aux bornes de l'antenne, sont réalisés sous forme de ressorts coniques.

Le document DE 10 2010 028444 décrit un document ayant une puce connectée à une antenne par connexion par matière anisotropique.

L'invention a donc pour but de remédier à au moins un des inconvénients de l'art antérieur. En particulier, l'invention vise à proposer un dispositif électronique interconnecté comprenant d'une part, au moins un premier composant électronique ou électrique comportant au moins une première plage d'interconnexion et d'autre part, un circuit électronique, ou électrique, pourvu d'au moins une deuxième plage d'interconnexion, dans lequel l'interconnexion électrique entre les premières et deuxièmes plages d'interconnexion est fiable et peut être réalisée avec un procédé industriel, de manière simple, rapide et peu coûteuse.

A cet effet, l'invention a pour objet un dispositif électronique conforme aux revendications 1 à 7.

Ainsi, chaque cale intermédiaire permet de faciliter l'interconnexion, en offrant une surface d'interconnexion et une épaisseur compatible avec l'usinage de puits conducteurs, et d'obtenir une connexion électrique fiable entre les premières plages d'interconnexion du premier composant et les deuxièmes plages d'interconnexion du circuit électronique.

L'invention se rapporte en outre à un procédé d'interconnexion selon la revendication 8. L'invention se rapporte en outre à un procédé de fabrication d'un dispositif électronique selon les revendications 9 à 16.

Ainsi, les cales intermédiaires d'interconnexion peuvent être reportées sur la surface du circuit imprimé, par une technique de report CMS, simultanément aux composants électroniques, en une seule et même étape. Ce report est réalisé de manière automatisée, par une machine de report.

L'invention se rapporte enfin à un support notamment bobiné, comprenant une pluralité de logements ou emplacements comprenant chacun une cale intermédiaire d'interconnexion électrique de dimension calibrée. Ces supports sont destinés à la mise en œuvre du procédé. Toutefois, ce conditionnement obtenu d'une pluralité de cale est utile aussi pour un report de type manuel de cales non CMS ou d'autres fins : transport, stockage, distribution des cales.

La cale intermédiaire d'interconnexion présente notamment une épaisseur calibrée inférieure à 0,4 mm, avec une tolérance inférieure à 0,1 mm, de préférence inférieure à 0,01mm.

D'autres particularités et avantages de l'invention apparaitront à la lecture de la description suivante faite à titre d'exemple illustratif et non limitatif, en référence aux Figures annexées qui représentent :
- La Figure 1, déjà décrite, un schéma en coupe d'une carte bancaire interconnectée selon l'art antérieur,
- La Figure 2, déjà décrite, un schéma en coupe d'une autre carte bancaire interconnectée selon l'art antérieur,
- Les Figures 3A à 3D, des schémas en coupe d'une carte bancaire interconnectée à contacts affleurant, selon un mode de réalisation de l'invention, à différentes étapes de sa fabrication.

L'exemple décrit dans la suite de la description se réfère à une carte à puce bancaire interconnectée. Cependant, l'invention ne se limite pas à cet exemple et s'applique plus généralement à tout dispositif électronique interconnecté, c'est-à-dire à tout dispositif comprenant au moins deux composants électroniques ou électriques reliés électriquement et disposés à différentes hauteurs dans l'épaisseur du corps du dispositif électronique.

Les cartes bancaires interconnectées, fonctionnent avec et/ou sans contact. Ces cartes comprennent un module électronique sécurisé, équipé d'au moins une puce sécurisée reliée à une interface de communication. Cette interface de communication comprend des plages de contacts externes au format ISO7816, c'est à dire destinées à affleurer la surface de la carte, et/ou une antenne noyée dans le corps de carte apte à communiquer sans contact selon la norme ISO14443 ou ISO 15693.

Dans la suite de la description, on entend par « surface externe » du module, la surface du module affleurant la surface de la carte.

On entend par « surface externe » ou « surface supérieure » de la carte, la surface de la carte à laquelle affleurent l'écran et/ou les éventuelles plages de contact externes du module.

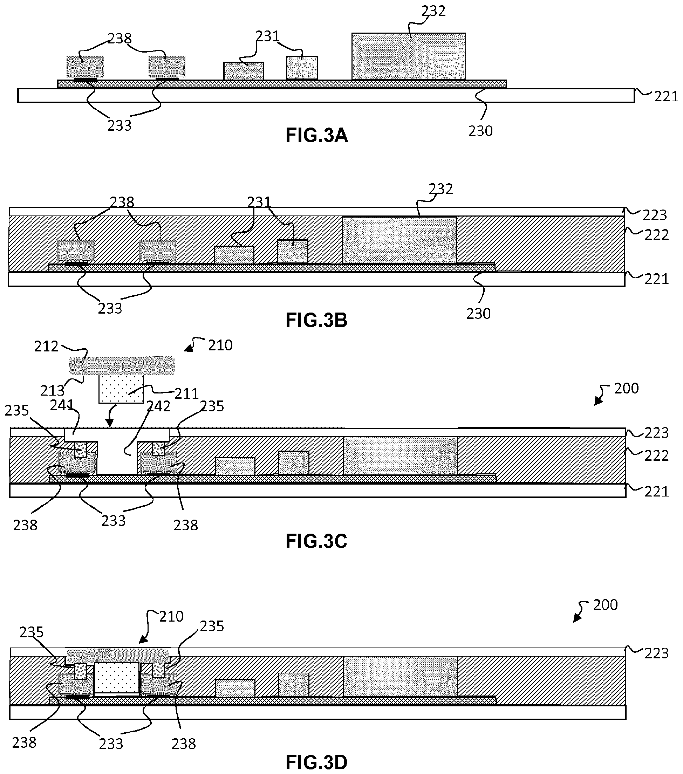

Les Figures 3A à 3D schématisent une carte bancaire interconnectée comprenant un module sécurisé à contacts affleurant, vue en coupe, à différentes étapes de sa fabrication. Le corps de carte 200 comprend au moins deux couches. Il comprend en effet une première couche 221 dont la surface dite « inférieure » est opposée à la surface supérieure. Il comprend en outre au moins une autre couche 222 pourvue de cavités pour y loger les éléments devant être embarqués dans le corps de carte.

Dans un premier temps, (Figure 3A), un substrat flexible 230 est disposé sur la première couche 221 inférieure de constitution du corps de carte. Ce substrat flexible 230 supporte un circuit électronique ou électrique 230. Ce circuit est de préférence imprimé, par sérigraphie par exemple. Il supporte des composants électroniques, ou électriques, référencés 231, 232 sur la Figure 3A. Ces composants, disposés sur le circuit imprimé, comprennent par exemple au moins un microcontrôleur apte à accéder à des informations contenues dans la puce sécurisée du module électronique sécurisé, une batterie et un écran 232. L'écran 232 est destiné à être visible de la surface externe de la carte. Il peut éventuellement être recouvert d'un film ou d'une couche transparente. Le circuit imprimé peut en outre comprendre un ou plusieurs boutons poussoirs, ou clavier capacitif, apte à être activés depuis la surface externe de la carte afin de communiquer avec le porteur de carte.

Le substrat flexible 230 supporte le circuit imprimé sur lequel sont reportés les composants électroniques 231, ou électriques, par une technique bien connue dite « CMS » (acronyme pour « Composant Monté en Surface »), consistant à déposer par sérigraphie une couche de pâte à braser sur le circuit imprimé à l'emplacement des composants, à reporter les composants grâce à une machine de report automatisée, puis à placer le substrat dans un four de refusion afin de faire fondre la pâte à braser et former une brasure. Les composants ne supportant pas un tel traitement thermique, tel que l'écran 232 par exemple, sont fixés sur le substrat ultérieurement par un autre procédé. De manière avantageuse, au moment de la fabrication du circuit imprimé, simultanément au report des composants électroniques 231 par la technique de report CMS, une cale intermédiaire d'interconnexion électrique 238 est reportée sur chaque plages d'interconnexion 233 du circuit imprimé, destinée à relier électriquement les plages d'interconnexion du module électronique à au moins un des composants électronique du circuit imprimé. Une pâte à braser est donc déposée sur les plages d'interconnexion 233 du circuit imprimé, avec une épaisseur identique à celle utilisée pour les autres composants électroniques 231. Les cales intermédiaires 238 sont reportées sur les plages d'interconnexion 233, tout comme les composants électroniques, au moyen d'un équipement automatique de report qui peut être le même que celui utilisé pour le report des composants électroniques 231. Le circuit est ensuite passé dans un four de refusion afin de faire refondre la pâte déposée et former une brasure.

La pâte à braser peut être déposée sur une zone d'une plage d'interconnexion 233 ou sur au moins deux zones ou sur toute sa surface. De préférence, elle est déposée sur au moins deux zones pour assurer un bon maintien de la cale.

Les cales intermédiaires d'interconnexion 238 sont conductrices. Elles sont de préférence, mais non exclusivement, métalliques et leur taille est compatible avec le procédé de report CMS. Dans une variante de réalisation, les cales peuvent comprendre un cœur isolant et au moins deux surfaces opposées conductrices électriquement, et électriquement reliées entre-elles. Elles peuvent aussi être réalisées en mousse élastomère chargée de particules électriquement conductrices par exemple.

Les cales intermédiaires d'interconnexion électriques 238 sont conditionnées dans des logements, ou alvéoles, ménagées dans des supports, se présentant sous forme de bandes bobinées, et montés sur l'équipement automatique de report. Ces cales sont destinées à faciliter l'établissement de la connexion électrique entre au moins un composant électronique du circuit imprimé, via les plages d'interconnexion 233, et la puce sécurisée, via les plages d'interconnexion 213 de l'interface de communication du module sécurisé 210, auxquelles la puce sécurisée est reliée.

Le circuit imprimé 230 et les composants électroniques, ou électriques, 231, 232 ainsi que les cales intermédiaires 238 d'interconnexion électrique sont ensuite recouverts d'au moins une deuxième couche 222 de constitution du corps de carte (Figure 3B). Cette deuxième couche 222 comprend des cavités pour y loger le circuit imprimé 230 et les différents éléments 231, 232, 238 qu'il supporte. Une couche supérieure 223, de même nature que la première couche 221, peut en outre recouvrir la couche 222. Dans ce cas, cette couche est transparente au moins dans une zone en regard de l'afficheur 232. Cette couche permet avantageusement de protéger la surface de la carte ainsi que l'afficheur.

Une double cavité 241, 242 destinée à accueillir le module sécurisé 210 est ensuite usinée dans l'épaisseur du corps de carte. Cette cavité comprend une première partie 242 centrale et plus profonde destinée à accueillir la puce sécurisée encapsulée dans une résine de protection 211, tandis qu'une deuxième partie 241 plus large et moins profonde permet de loger l'interface de communication du module sécurisé. La partie 242 centrale de la cavité peut déboucher sur le circuit imprimé 230, ou le traverser, dans une zone entourée par les plages d'interconnexion 233 à connecter.

Simultanément à l'usinage de la cavité d'accueil du module, des puits 235 sont usinés à partir du fond de la deuxième partie 241 de la cavité, au droit des cales intermédiaires 238 d'interconnexion électrique. Une matière conductrice, par exemple une colle conductrice, est ensuite dispensée dans ces puits afin d'assurer la conduction électrique. Ces puits 235 sont usinés de sorte qu'ils pénètrent légèrement dans l'épaisseur des cales intermédiaires 238 d'interconnexion. De préférence, chaque puits pénètre sur une hauteur comprise entre 5% et 15% de l'épaisseur totale de la cale intermédiaire 238 d'interconnexion. Le fait de faire pénétrer les puits 235 dans les cales 238 permet d'obtenir une bonne continuité électrique. De plus, les cales intermédiaires 238 d'interconnexion sont suffisamment épaisses, et en tout cas plus épaisses que la tolérance à l'usinage des puits, si bien qu'il est possible d'usiner les puits sans nécessiter une grande précision car, même s'ils pénètrent dans les cales, ils ne risquent pas de les percer.

Le module sécurisé 210 est ensuite disposé dans sa double cavité 241, 242, de sorte que les plages de contact externes 212 de son interface de communication affleurent la surface externe de la carte 200 et que ses plages d'interconnexion 213, situées sur la face interne de l'interface de communication, soient disposées en regard du fond de la cavité 241 (FIG.3C). Ainsi, les plages d'interconnexion 213 de la face interne de l'interface de communication du module sécurisé, reliées à la puce sécurisée, sont électriquement connectées à au moins un composant électronique du circuit imprimé, tel qu'un microcontrôleur et/ou ou une batterie par exemple, par le biais des puits conducteurs 235, des cales intermédiaires d'interconnexion 238 et des plages d'interconnexion 233 du circuit imprimé (FIG.3D).

De la même façon, des cales intermédiaires 238 d'interconnexion électrique peuvent être utilisées pour permettre de rehausser les connexions d'une batterie ou de tout autre composant électronique dans l'épaisseur du corps d'un dispositif électronique, afin de rapprocher le composant électronique de la surface supérieure de ce dispositif électronique. Une cale intermédiaire d'interconnexion électrique peut donc être appliquée sur toute plage d'interconnexion dont l'épaisseur est inférieure ou de l'ordre de 20µm, c'est-à-dire inférieure à la tolérance d'usinage de puits dans une carte par exemple.

Les cales intermédiaires d'interconnexion sont de préférence réalisées dans un matériau métallique conducteur. Etant donné que lors de l'usinage des puits conducteurs, les cales peuvent également être usinées légèrement dans leur épaisseur, le matériau de constitution des cales doit en outre être suffisamment ductile pour permettre son usinage simultanément à l'usinage des puits dans le plastique de constitution de la carte, ou plus généralement du dispositif électronique, avec le même équipement d'usinage. Pour cela, le matériau de constitution des cales intermédiaires peut avantageusement être choisi parmi l'un au moins des matériaux suivants : cuivre, argent, nickel, cadmium, étain, indium, ou un de leurs alliages.

Les cales intermédiaire d'interconnexion présentent une épaisseur avantageusement comprise entre 150 et 400µm. Cette épaisseur est calibrée, en fonction du dispositif électronique à réaliser, avec une tolérance inférieure à 0,1 mm et de préférence inférieure à 0,01mm.

Leurs surfaces de contact, et notamment leur surface en regard des plages d'interconnexion 233 du circuit imprimé, sont avantageusement planes. Ainsi, elles permettent d'assurer un contact électrique optimal. De plus leurs surfaces sont de préférence de forme rectangulaire, carrée ou oblongue.

Les cales intermédiaires d'interconnexion décrites ci-dessus offrent donc une interconnexion électrique de très bonne qualité, elles peuvent être reportées en une seule étape, au moment du report des composants électroniques par un procédé automatique de report CMS. Par conséquent, les cartes interconnectées qui viennent d'être décrites, et plus généralement les dispositifs électroniques interconnectés, peuvent être fabriqués simplement et rapidement, sans nécessiter une grande précision, à faible coût et de manière totalement automatisée, compatible avec des procédés industriels.

Plus particulièrement, en matière d'interconnexion électrique, avec ou sans le procédé de report de type CMS, l'invention a pour objet un dispositif électronique (200) comprenant au moins un premier composant (210) électronique, ou électrique, comportant au moins une première plage d'interconnexion (213), ledit dispositif électronique comprenant en outre un circuit (230) électronique, ou électrique, pourvu d'au moins une deuxième plage d'interconnexion (233), ledit dispositif électronique comprenant en outre, entre chaque première (213) et deuxième (233) plage d'interconnexion, une cale intermédiaire d'interconnexion électrique (238), caractérisé en ce que la cale présente deux plans parallèles externes électriquement conducteurs et reliés électriquement l'un à l'autre, lesdits plans étant espacés d'une distance calibrée, la cale étant configurée pour servir de support conducteur électrique sensiblement stable dimensionnellement à l'encontre d'effort de compression d'une opération d'interconnexion électrique, dans une direction perpendiculaire à ces plans.

Avantageusement, le report de type CMS peut être appliqué au report de matière, cale calibrée semi conductrice, en mousse conductrice électriquement ou comprenant une couche isolante notamment pour connexion capacitive, de manière à permettre une production industrielle de précision de dispositifs selon l'invention. On précise qu'un isolant calibré peut servir à permettre de définir précisément la valeur d'une capacité formée entre des plages conductrices en regards l'une de l'autre (formant plaques de condensateur). Ici, il y a également connexion électrique de type capacitive entre des plages de condensateur.

Une cale peut comporter un isolant entre les deux plans parallèles externe de la cale qui eux sont conducteurs en surface externe. Les plans conducteurs peuvent être reliés ensemble par une piste conductrice ou film conducteur s'étendant par exemple entre les deux plans, sur un côté externe de la cale ou au centre comme un via conducteur.

Ainsi, on peut obtenir une capacité et la reporter et connecter par technique CMS dès l'instant où elle comporte au moins un plan conducteur électriquement destiné à être reporté, soudé contre un circuit électrique comportant au moins une plage de contact ou d'interconnexion. En fait, l'invention peut viser des cales ayant au moins une couche conductrice superposée avec une couche isolante. La couche isolante peut être recouverte par une autre couche conductrice, notamment pour poursuivre le circuit et servir de point d'interconnexion électrique. Une valeur d'une capacité (déterminée par l'épaisseur calibré de l'isolant et la surface des plages en regard l'une de l'autre), peut être ainsi maitrisée dans une production industrielle de circuit électronique/ électrique.

La deuxième plage d'interconnexion conductrice selon l'invention peut être apportée contre la cale une fois reportée par CMS de différentes manières d'interconnexion électriques connues de l'homme de l'art (soudure, dépôt de matière conductrice pâteuse, thermo compression, ultrason,...)

L'isolant peut être prévu pour résister à la température notamment du traitement CMS comme une céramique ou autre isolant synthétique.

Nous faisons observer que la cale selon l'invention est un élément de circuit qui se distingue d'un composant électrique ou électronique fini. La technique CMS est à priori réservée pour des composants électroniques finis pour les reporter avec toutes ses connexions électriques soudées sur un circuit imprimé.

## Revendications

1. Dispositif électronique (200) comprenant un corps (221, 222, 223) et un circuit (230) électronique ou électrique comportant deux composants (210 ; 231) électroniques ou électriques interconnectés et disposés à différentes hauteurs dans l'épaisseur du corps du dispositif, lesdits composants comprenant respectivement une première (213) et seconde (233) plage d'interconnexion, ledit dispositif comprenant une cale intermédiaire (238) d'interconnexion électrique conductrice électriquement ou avec un isolant électrique, disposée entre lesdites plages d'interconnexion et présentant une épaisseur calibrée, **caractérisé en ce que** la cale est configurée et connectée conformément à un composant électrique CMS.

2. Dispositif électronique selon la revendication 1, **caractérisé en ce qu'**il constitue une carte à puce interconnectée dans laquelle le premier composant est un module électronique (210) équipé d'au moins une puce électriquement reliée à une interface de communication (212) pour communiquer avec un lecteur de carte et dont ladite au moins une première plage d'interconnexion (213) est agencée sur une face interne dudit module électronique (210), et **en ce que** ledit circuit électronique ou électrique supporte au moins un deuxième composant (231, 232) électronique, ou électrique, électriquement relié à ladite au moins une deuxième plage d'interconnexion (233).

3. Dispositif électronique selon l'une des revendications 1 à 2, **caractérisé en ce que** ladite cale intermédiaire (238) d'interconnexion électrique est électriquement connectée à ladite au moins une deuxième plage d'interconnexion (233) dudit circuit (230) par l'intermédiaire d'une matière conductrice électriquement.

4. Dispositif électronique selon l'une des revendications 1 à 3, **caractérisé en ce que** ladite cale intermédiaire (238) d'interconnexion électrique présente une épaisseur calibrée comprise entre 0,15 et 0,40 mm, avec une tolérance inférieure à 0,01mm.

5. Dispositif électronique selon l'une des revendications 1 à 4, **caractérisé en ce que** la cale intermédiaire (238) d'interconnexion électrique est réalisée dans un matériau métallique ductile.

6. Dispositif électronique selon la revendication 5, **caractérisé en ce que** la cale intermédiaire (238) d'interconnexion électrique est réalisée dans un matériau choisi parmi au moins l'un des matériaux suivants : cuivre, argent, nickel, cadmium, étain, indium, ou un de leurs alliages.

7. Dispositif électronique selon l'une des revendications 1 à 6, **caractérisé en ce qu'**il comprend en outre des puits conducteurs (235) pratiqués dans son corps, au droit de chaque cale intermédiaire (238) d'interconnexion.

8. Procédé d'interconnexion de deux composants (210; 231) électroniques, ou électriques d'un circuit (230) de dispositif électronique (200) comprenant un corps (221, 222, 223), lesdits composants étant interconnectés et disposés à différentes hauteurs dans l'épaisseur du corps du dispositif et comprenant chacun une plage d'interconnexion (213 ; 233), ledit procédé comprenant des étapes de report et de connexion d'une cale intermédiaire (238) d'interconnexion électrique conductrice électriquement ou avec un isolant électrique, entre lesdites plages d'interconnexion de chaque composant, ladite cale intermédiaire d'interconnexion présentant une épaisseur calibrée, ledit procédé de fabrication étant **caractérisé en ce que** le report et la connexion sont effectuées conformément à une technique de report et de connexion CMS.

9. Procédé de fabrication d'un dispositif électronique (200) comprenant un corps (221, 222, 223) et comportant deux composants (210 ; 231) électroniques, ou électriques interconnectés et disposés à des hauteurs différentes dans l'épaisseur du corps du dispositif électronique (200), **caractérisé en ce que** les deux composants sont interconnectés conformément au procédé selon la revendication précédente.

10. Procédé selon la revendication 8 à 9, **caractérisé en ce qu'**il consiste en outre à reporter au moins un composant électronique, par ladite technique de report CMS, sur ledit circuit (230), ledit report étant réalisé simultanément au report de ladite cale intermédiaire (238) d'interconnexion et/ou avec un seul et même équipement de report automatique de composants.

11. Procédé selon l'une des revendications 8 à 10, **caractérisé en ce que** préalablement au report dudit premier composant (210) dans le corps du dispositif électronique, afin de connecter électriquement ses plages d'interconnexion (213) aux deuxièmes plages d'interconnexion (233) dudit circuit (230) via les cales intermédiaire (238) d'interconnexion électrique, des puits (235) sont usinés dans le corps du dispositif, au droit des cales intermédiaires d'interconnexion (238), et sont remplis d'une matière électriquement conductrice.

12. Procédé selon la revendication 11, **caractérisé en ce que** les puits (235) pénètrent dans l'épaisseur des cales intermédiaire (238) d'interconnexion sur une hauteur comprise entre 5 et 15% de l'épaisseur totale des cales.

13. Procédé selon l'une des revendications 8 à 12, **caractérisé en ce qu'**une couche de pâte à braser est déposée sur au moins une zone, de préférence deux zones, de chaque plage d'interconnexion (233) dudit circuit (230), avant le report de ladite cale intermédiaire d'interconnexion (238).

14. Procédé selon l'une des revendications 8 à 13, **caractérisé en ce que** les cales intermédiaires d'interconnexion (238) sont reportées sur des plages d'interconnexion (230) dudit circuit, présentant une épaisseur inférieure ou égale à 20 µm.

15. Procédé selon l'une des revendications 8 à 14, **caractérisé en ce que** ladite cale intermédiaire (238) d'interconnexion présente une épaisseur calibrée inférieure à 0,4 mm, avec une tolérance inférieure à 0,01 mm.

16. Procédé selon l'une des revendications 8 à 15, **caractérisé en ce que** plusieurs cales intermédiaires (238) d'interconnexion sont conditionnées dans des logements d'un support bobiné à la manière de composants de type CMS.

17. Support notamment bobiné, comprenant une pluralité de logements ou emplacements comprenant chacun une cale intermédiaire d'interconnexion électrique de dimension calibrée pour la mise en œuvre du procédé selon l'une des revendications 8 à 16.

## Patentansprüche

1. Elektronische Vorrichtung (200), umfassend einen Körper (221, 222, 223) und eine elektronische oder elektrische Schaltung (230), umfassend zwei elektronische oder elektrische Komponenten (210; 231), die in unterschiedlichen Höhen in der Dicke des Körpers der Vorrichtung verbunden und angeordnet sind; wobei die Komponenten jeweils einen ersten (213) und zweiten (233) Verbindungsbereich umfassen, wobei die Vorrichtung eine Zwischenscheibe (238) für die elektrische Verbindung umfasst, die elektrisch leitend ist oder einen elektrischen Isolator aufweist und die zwischen den Verbindungsbereichen angeordnet ist und eine kalibrierte Dicke aufweist, **dadurch gekennzeichnet, dass** die Scheibe entsprechend einer elektrischen SMD-Komponente (oberflächenmontiertes Bauelement) konfiguriert und angeschlossen ist.

2. Elektronische Vorrichtung nach Anspruch 1, **dadurch gekennzeichnet, dass** sie eine verbundene Chipkarte darstellt, wobei die erste Komponente ein elektronisches Modul (210) ist, das mit mindestens einem Chip ausgestattet ist, der elektrisch mit einer Kommunikationsschnittstelle (212) zur Kommunikation mit einem Kartenleser verbunden ist, und dessen mindestens einer erste Verbindungsbereich (213) auf einer Innenseite des elektronischen Moduls (210) angeordnet ist, und dass die elektronische oder elektrische Schaltung mindestens eine zweite elektronische oder elektrische Komponente (231, 232) trägt, die elektrisch mit dem mindestens einen zweiten Verbindungsbereich (233) verbunden ist.

3. Elektronische Vorrichtung nach einem der Ansprüche 1 bis 2, **dadurch gekennzeichnet, dass** die Zwischenscheibe (238) für die elektrische Verbindung elektrisch mit dem mindestens einen zweiten Verbindungsbereich (233) der Schaltung (230) über ein elektrisch leitendes Material verbunden ist.

4. Elektronische Vorrichtung nach einem der Ansprüche 1 bis 3, **dadurch gekennzeichnet, dass** die Zwischenscheibe (238) für die elektrische Verbindung eine kalibrierte Dicke zwischen 0,15 und 0,40 mm mit einer Toleranz von weniger als 0,01 mm aufweist.

5. Elektronische Vorrichtung nach einem der Ansprüche 1 bis 4, **dadurch gekennzeichnet, dass** die Zwischenscheibe (238) für die elektrische Verbindung aus einem duktilen metallischen Material hergestellt ist.

6. Elektronische Vorrichtung nach Anspruch 5, **dadurch gekennzeichnet, dass** die Zwischenscheibe (238) für die elektrische Verbindung aus einem Material hergestellt ist, ausgewählt aus mindestens einem der folgenden Materialien: Kupfer, Silber, Nickel, Cadmium, Zinn, Indium oder einer ihrer Legierungen.

7. Elektronische Vorrichtung nach einem der Ansprüche 1 bis 6, **dadurch gekennzeichnet, dass** sie ferner leitende Bohrungen (235) umfasst, die in ihrem Körper entsprechend jeder Zwischenscheibe (238) für die Verbindung ausgebildet sind.

8. Verfahren zum Verbinden zweier elektronischer oder elektrischer Komponenten (210; 231) einer Schaltung (230) einer elektronischen Vorrichtung (200), die einen Körper (221, 222, 223) umfasst, wobei die Komponenten in unterschiedlichen Höhen in der Dicke des Körpers der Vorrichtung verbunden und angeordnet sind und jeweils einen Verbindungsbereich (213, 233) umfassen, wobei das Verfahren Schritte zum Bonding und Verbinden einer Zwischenscheibe (238) für die elektrische Verbindung, die elektrisch leitend ist oder einen elektrischen Isolator aufweist, zwischen den Verbindungsbereichen jeder Komponente umfasst, wobei die Zwischenscheibe für die Verbindung eine kalibrierte Dicke aufweist, wobei das Verfahren zur Herstellung **dadurch gekennzeichnet ist, dass** Bonding und Verbinden entsprechend einer SMD (oberflächenmontiertes Bauelement)-Technik zum Bonding und Verbinden ausgeführt wird .

9. Verfahren zum Herstellen einer elektronischen Vorrichtung (200), die einen Körper (221, 222, 223) umfasst und zwei elektronische Komponenten (210; 231) aufweist, oder die elektrisch verbunden und in unterschiedlichen Höhen in der Dicke des Körpers der elektronischen Vorrichtung (200) angeordnet sind, **dadurch gekennzeichnet, dass** die beiden Komponenten gemäß dem Verfahren nach dem vorhergehenden Anspruch miteinander verbunden werden.

10. Verfahren nach Anspruch 8 bis 9, **dadurch gekennzeichnet, dass** es ferner darin besteht, mindestens eine elektronische Komponente durch die SMD-Bondingtechnik auf die Schaltung (230) zu bonden, wobei das Bonding gleichzeitig mit dem Bonding der Zwischenscheibe (238) für die Verbindung und/oder mit ein und derselben automatischen Komponentenbondingeinrichtung durchgeführt wird.

11. Verfahren nach einem der Ansprüche 8 bis 10, **dadurch gekennzeichnet, dass** vor dem Bonding der ersten Komponente (210) in den Körper der elektronischen Vorrichtung, um dessen Verbindungsbereich (213) elektrisch mit dem zweiten Verbindungsbereich (233) der Schaltung (230) über die Zwischenscheiben (238) für die elektrische Verbindung zu verbinden, die Bohrungen (235) im Körper der Vorrichtung entsprechend den Zwischenscheiben (238) der Verbindung gefertigt und mit einem elektrisch leitenden Material gefüllt werden.

12. Verfahren nach Anspruch 11, **dadurch gekennzeichnet, dass** die Bohrungen (235) über eine Höhe zwischen 5 und 15 % der Gesamtdicke der Scheiben in die Dicke der Zwischenscheiben (238) für die Verbindung eindringen.

13. Verfahren nach einem der Ansprüche 8 bis 12, **dadurch gekennzeichnet, dass** vor dem Bonding der Zwischenscheibe (238) für die Verbindung eine Schicht Lötpaste auf mindestens einer Zone, vorzugsweise zwei Zonen, jedes Verbindungsbereichs (233) der Schaltung (230) abgeschieden wird.

14. Verfahren nach einem der Ansprüche 8 bis 13, **dadurch gekennzeichnet, dass** die Zwischenscheiben (238) für die Verbindung auf Verbindungsbereiche (230) der Schaltung mit einer Dicke von weniger als oder gleich 20 µm gebondet werden.

15. Verfahren nach einem der Ansprüche 8 bis 14, **dadurch gekennzeichnet, dass** die Zwischenscheibe (238) für die Verbindung eine kalibrierte Dicke von weniger als 0,4 mm mit einer Toleranz von weniger als 0,01 mm aufweist.

16. Verfahren nach einem der Ansprüche 8 bis 15, **dadurch gekennzeichnet, dass** mehrere Zwischenscheiben (238) für die Verbindung in Gehäusen eines gewickelten Trägers in der Art von SMD-artigen Komponenten verpackt sind.

17. Träger, insbesondere gewickelt, umfassend eine Vielzahl von Gehäusen oder Stellen, die jeweils eine elektrische Zwischenscheibe für die Verbindung mit kalibrierter Abmessung umfassen, zur Durchführung des Verfahrens nach einem der Ansprüche 8 bis 16.

## Claims

1. An electronic device (200) comprising a body (221, 222, 223) and an electronic or electrical circuit (230) comprising two electronic or electrical components (210; 231) interconnected and disposed at different heights in the thickness of the body of the device, said components comprising first (213) and second (233) interconnection pads, respectively, said device comprising an intermediate electrical interconnection shim (238) that is electrically conductive or has an electrical insulator and which is disposed between said interconnection pads and has a calibrated thickness, **characterised in that** the shim is configured and connected in accordance with an SMC (surface-mount component) electrical component.

2. The electronic device according to claim 1, **characterised in that** it constitutes an interconnected smart card, wherein the first component is an electronic module (210) provided with at least one chip electrically connected to a communication interface (212) in order to communicate with a card reader and said at least one first interconnection pad (213) thereof is arranged on an inner face of said electronic module (210), and **in that** said electronic or electrical circuit supports at least one second electronic or electrical component (231, 232), electrically connected to said at least one second interconnection pad (233).

3. The electronic device according to one of claims 1 to 2, **characterised in that** said intermediate electrical interconnection shim (238) is electrically connected to said at least one second interconnection pad (233) of said circuit (230) via an electrically conductive material.

4. The electronic device according to one of claims 1 to 3, **characterised in that** said intermediate electrical interconnection shim (238) has a calibrated thickness between 0.15 and 0.40 mm, with a tolerance lower than 0.01 mm.

5. The electronic device according to one of claims 1 to 4, **characterised in that** the intermediate electrical interconnection shim (238) is made of a ductile metal material.

6. The electronic device according to claim 5, **characterised in that** the intermediate electrical interconnection shim (238) is made of a material chosen from among at least one of the following materials: copper, silver, nickel, cadmium, tin, indium or an alloy thereof.

7. The electronic device according to one of claims 1 to 6, **characterised in that** it also comprises conductive wells (235) made in its body, facing each intermediate interconnection shim (238).

8. A method for interconnecting two electronic or electrical components (210; 231) of a circuit (230) of an electronic device (200) comprising a body (221, 222, 223), said components being interconnected and disposed at different heights in the thickness of the body of the device and each comprising an interconnection pad (213; 233), said method comprising steps of placing and connecting an intermediate electrical interconnection shim (238), which is electrically conductive or has an electrical insulator, between said interconnection pads of each component, said intermediate interconnection shim having a calibrated thickness, said manufacturing method being **characterised in that** the placement and the connection are carried out in accordance with an SMC (surface-mount component) placement and connection technique.

9. A method for manufacturing an electronic device (200) comprising a body (221, 222, 223) and comprising two electronic or electrical components (210; 231), interconnected and disposed at different heights in the thickness of the body of the electronic device (200), **characterised in that** the two components are interconnected in accordance with the method according to the preceding claim.

10. The method according to claims 8 to 9, **characterised in that** it also involves placing at least one electronic component, by said SMC placement technique, on said circuit (230), said placement being carried out simultaneously with the placement of said intermediate interconnection shim (238) and/or using a single automatic component placement system.

11. The method according to one of claims 8 to 10, **characterised in that** prior to the placement of said first component (210) in the body of the electronic device, in order to electrically connect the interconnection pads (213) thereof to the second interconnection pads (233) of said circuit (230) via the intermediate electrical interconnection shims (238), wells (235) are machined in the body of the device, facing the intermediate interconnection shims (238), and are filled with an electrically conductive material.

12. The method according to claim 11, **characterised in that** the wells (235) enter the thickness of the intermediate interconnection shims (238) over a height between 5 and 15% of the total thickness of the shims.

13. The method according to one of claims 8 to 12, **characterised in that** a layer of solder paste is deposited on at least one zone, preferably two zones, of each interconnection pad (233) of said circuit (230), before placing said intermediate interconnection shim (238).

14. The method according to one of claims 8 to 13, **characterised in that** the intermediate interconnection shims (238) are placed on the interconnection pads (230) of said circuit, having a thickness lower than or equal to 20 µm.

15. The method according to one of claims 8 to 14, **characterised in that** said intermediate interconnection shim (238) has a calibrated thickness of less than 0.4 mm, with a tolerance lower than 0.01 mm.

16. The method according to one of claims 8 to 15, **characterised in that** a plurality of intermediate interconnection shims (238) are packaged in recesses of a coiled support as SMC-type components.

17. A support, in particular coiled, comprising a plurality of recesses or slots each comprising an intermediate electrical interconnection shim having a calibrated size for carrying out the method according to one of claims 8 to 16.
